# EUROPEAN PATENT SPECIFICATION

(11) **EP 0 480 116 B1**
(45) Date of publication and mention of the grant of the patent: **24.07.1996**
(21) Application number: 90600021.1
(22) Date of filing: 10.10.1990
(51) Int. Cl.: B01J 12/00

(54) **Use of Metal-solid electrolyte catalysts**
Verwendung von Metallfesten Elektrolytkatalysatoren
Utilisé de Catalyseurs métal-électrolytes solides

(43) Date of publication of application: 15.04.1992
(73) Proprietor: Vayenas, Constantin G., Aroi, Patras (GR); Bebelis, Symeon I., GR-26225 Patras (GR); Yentekakis, Ioannis V., GR-26442 Patras (GR); Tsiakaras, Panayotis E., Zavlani, Patras (GR)
(72) Inventor: Vayenas, Constantin G., Aroi, Patras (GR); Bebelis, Symeon I., GR-26225 Patras (GR); Yentekakis, Ioannis V., GR-26442 Patras (GR); Tsiakaras, Panayotis E., Zavlani, Patras (GR)
(74) Representative: Metallinou-Gafou, Margarita

(56) References cited:
- WO-A-83/02605
- US-A- 4 092 227
- US-A- 4 248 941
- US-A- 4 329 208
- US-A- 4 863 813
- CATALYSIS LETTERS, no. 1, 1988, pages 423-428, J.C. BALTZER AG SCIENTIFIC PUBLISHING CO.; K. OTSUKA et al.: "Electrochemical enhancement of oxidative coupling of methane over LiCl-doped NiO using stabilized zirconia electrolyte"
- NATURE, vol. 343, 15th February 1990, pages 625-627; C.G. VAYENAS et al.: "Dependence of catalytic rates on catalyst work function"
- APPLIED PHYSICS A: SOLIDS AND SURFACES, vol. A49, no. 1, July 1989, pages 95- 103, Springer-Verlag, Berlin, DE; C.G. VAYENAS et al.: "Non- faradaic electrochemical modification of catalytic activity in solid electrolyte cells"
- SOLID STATE IONICS, vols. 28-30, 1988, pages 1521-1539, Elsevier Science Publishers B.V. (North-Holland Physics Publishing Division); C.G. VAYENAS: "Catalytic and electrocatalytic reactions in solid oxide fuel cells"
- JOURNAL OF ELECTROCHEMICAL SOCIETY, vol. 126, no. 6, June 1979, pages 1067- 1074; T.M. GÜR et al.: "Decomposition of nitric oxide on zirconia in a solid- state electrochemical cell"
- JOURNAL OF ELECTROCHEMICAL SOCIETY, vol. 131, no. 4, Arpil 1984, pages 839-845;
- M. STOUKIDES et al.: "Electrocatalytic rate enhancement of propylene epoxidation on porous silver electrodes using a zirconia oxygen pump"

## Description

The present invention refers to the use of non-impermeable metal-solid electrolyte catalysts and porous conductive (metallic or oxidic) films in contact with the porous solid electrolyte (e.g. stabilized zirconia or β''-Al₂O₃) for the catalytic conversion of chemical compounds to other chemical compounds via external or internal (as discussed below) application of an electrical potential or current between the conductive catalyst film and a second counter electrode film also in contact with the solid electrolyte. This set-up permits easy application of the recently discovered phenomenon of Non-Faradaic Electrochemical Modification of Catalytic Activity (NEMCA) for the improvement of catalytic properties (activity, selectivity) of metals and conductive metal oxides.

Chemical reactors in the Chemical Industry are, in their great majority, catalytic, i.e., they include a metal or a metal oxide catalyst (active phase) usually dispersed in the form of small particles on a usually inert porous carrier (e.g. SiO₂, γ-Al₂O₃).
The catalytic action, i.e., the conversion of reactants to desired products takes place on the surface of the metal or metal oxide active phase. Promoters are commonly used on the active phase or on the carrier surface in order to improve the effectiveness (reaction rate or product selectivity) of the active phase.

K. Otsuka et al., "Electrochemical enhancement of oxidative coupling of methane over LiCL-doped NiO using stabilized zirconia electrolyte", Catalysis Letters 1, 1988, 423-428, deal with electrochemical enhancement of oxidative coupling of methane by catalysis. Zirconia plates were used. No mention of porosity. The increase in the rate of the catalytic reaction,i.e. the increase in oxygen consumption is only 22% of I/2F at 10 µA and only 5% of I/2F at 80 µA (p. 426).No mention whatsoever of a Non-Faradaic rate increase is made. This document thus deals with electrocatalysis, not NEMCA as the present invention.

C.G. Vayenas, "Catalytic and electrocatalytic reactions in solid oxide fuel cells", Solid State Ionics 28-30, 1988, 1521-1539, deals with electrochemical reactions in fuel cells where the gas imperviousness of solid electrolyte is emphasized. The present invention, in contrast, deals with catalytic chemical reactions, which are not subject to the law of Faraday, the solid electrolyte being porous.

T.M. Gür et al., "Decomposition of nitric oxide on zirconia in a solid-state electrochemical cell", Journal of Electrochemical Society, vol. 126, no. 6, 1979, 1067-1074, also deals with electrochemical reactions and the catalytic rate increase is always smaller than I/2F.

M. Stoukides et al., "Electrocatalytic rate enhancement of propylene epoxidation on porous silver electrodes using a zirconia oxygen pump", Journal of Electrochemical Society, vol. 131, no. 4, 1984, 839-845, also refers to impervious solid electrolytes.

W.R. Grace & Co., WO-A-8 302 605, deal with electrocatalytic operation, where the rate increase is equal to I/2F and separate fuel and air streams are applied.

C.G. Vayenas et al., US-A-4 329 208, refer only to the epoxidation of ethylene using two separate streams and impervious solid electrolyte.

W. Haidinger, US-A-4 092 227, involves no solid electrolyte. The conductive catalyst film is on an insulating or semiconducting layer.

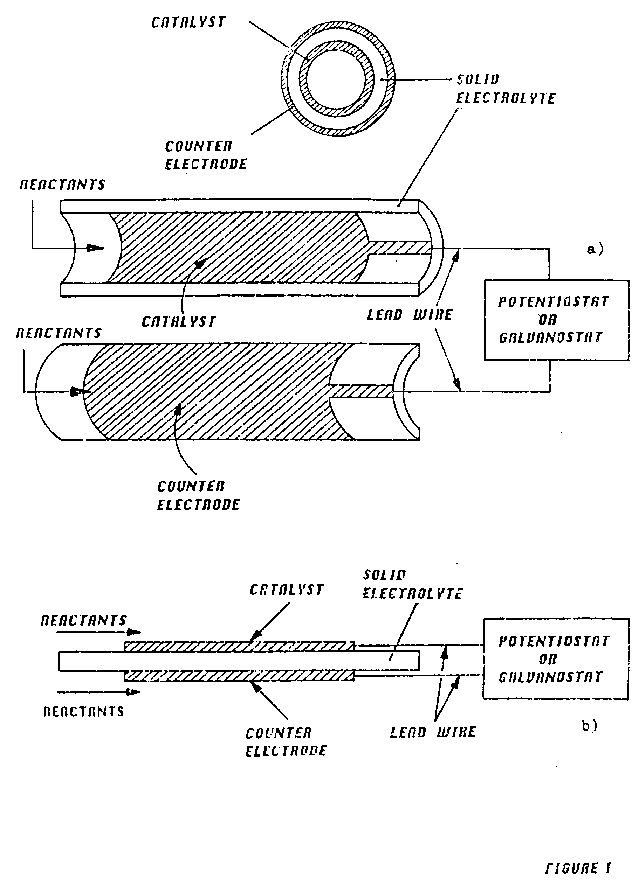

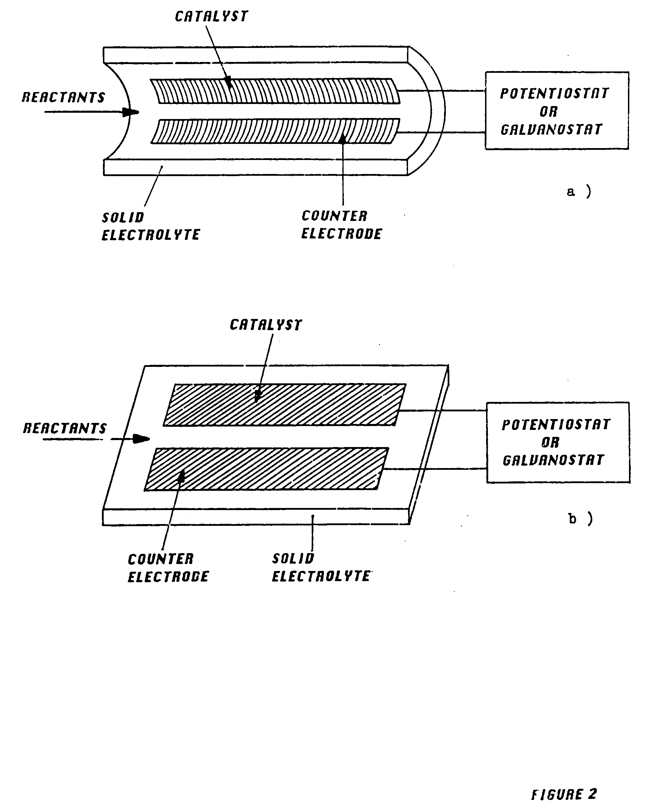

An electrical potential is applied between the porous catalyst film (catalyst) and a second porous metal or metal oxide film (counter electrode) which is placed either on the side of the solid electrolyte film which is opposite to the one where the catalyst is deposited (fig. 1) or on the same side with the catalyst (fig. 2). The applied electrical potential, which is usually on the order of ±0.5V up to ±1.5V causes electrochemical pumping of ions from (or to) the solid electrolyte to (or from) the metal surface, and leads to a dramatic enhancement of the catalytic rate and/or to a change of the catalyst product selectivity.

The potential can be applied to the catalyst either externally (e.g. by means of a potentiostat, galvanostat or battery) as shown in Figures 1 and 2 or inter nally, i.e. by means of the potential difference developed between two metals of different electronegativity supported on the solid electrolyte (marked by 1 and 2 in Figure 3) and forming a galvanic cell, the two metals being in electrical contact with the catalyst and the counter electrode, respectively (Figure 3). The necessary potential difference can also be developed directly between the catalyst and the solid electrolyte, since, such a potential difference always exists (Figure 4). In this case no counter electrode is required and the catalyst can either form a continuous film (Figure 4a) or small particles supported both on the external and the internal surface of the porous solid electrolyte (Figure 4b).

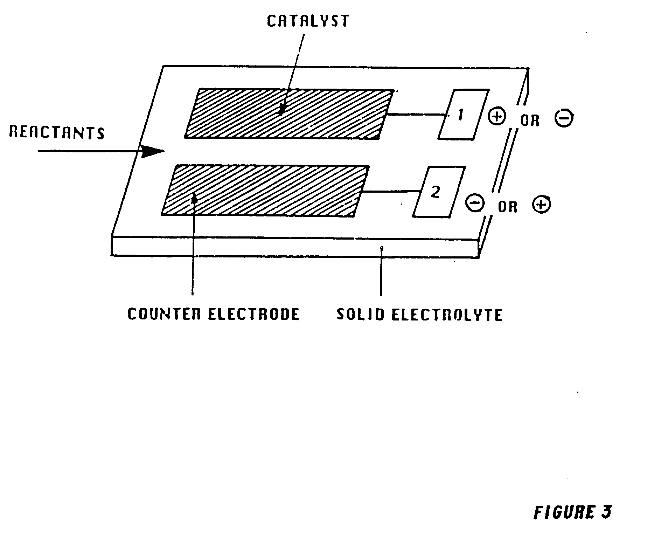

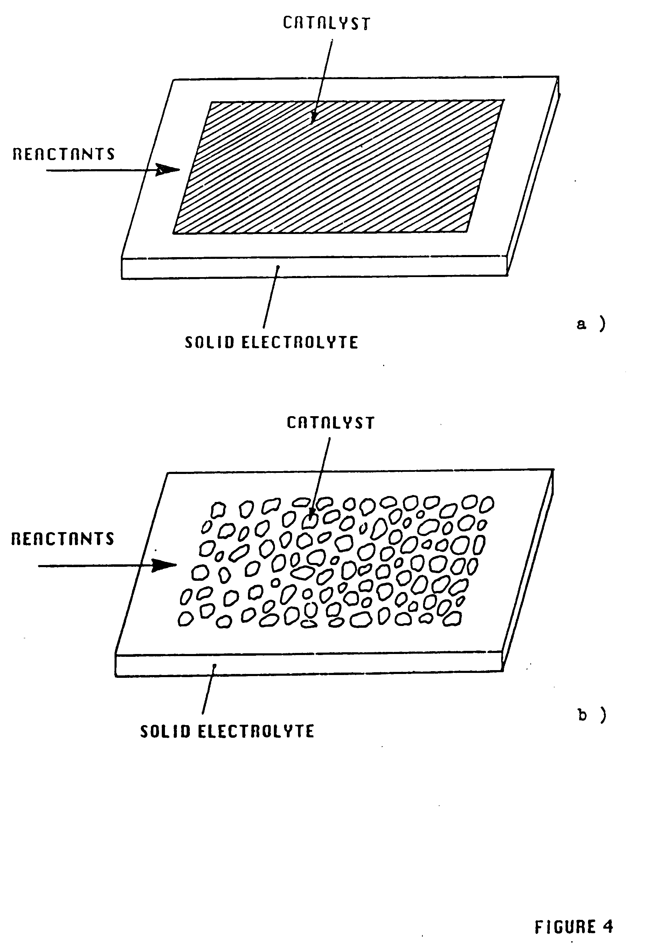

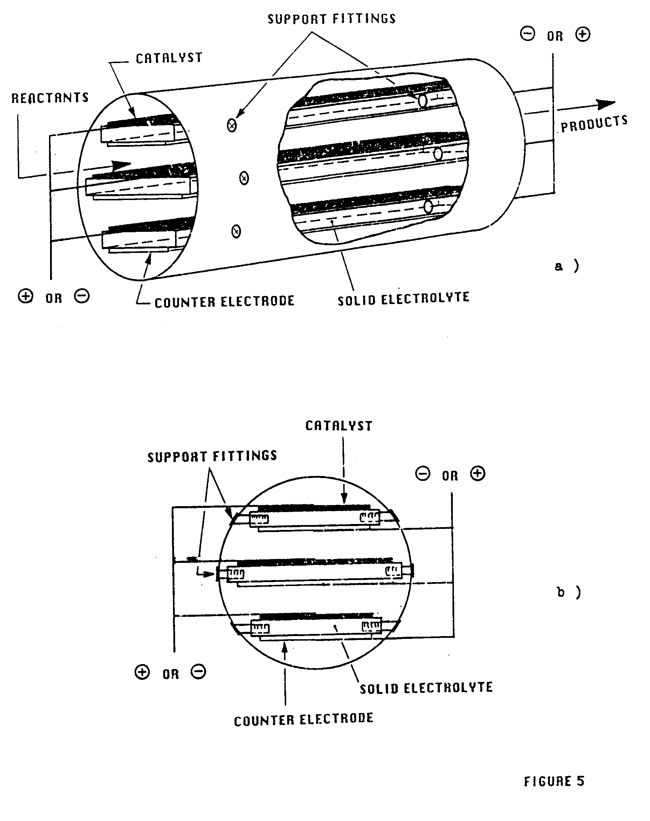

The solid electrolyte together with the supported catalyst and auxiliary electrode films is placed in a metal tube where reactants are continuously introduced and products removed, thus forming a continuous flow chemical reactor (Fig. 5). In all the above cases (Figures 1,2,3,4 and 5) the catalyst can be porous, i.e., permeable to gases. This makes the present invention different from all previous applications of solid electrolytes (fuel cells, electrolyzers etc.). The applied potential of current by means of a potentiostat or galvanostat can be either continuous or can be varied periodically in time.
The present invention, i.e. both the set-ups described in Figures 1,2,3,4 and 5 and their operation in enhancing solid electrolyte performance are substantially different from the set-ups and operations described in the existing publications related to the effect of Non-Faradaic Electrochemical Modification of Catalytic Activity, i.e. the NEMCA effect (Vayenas, Bebelis, Neophytides, J. Phys. Chem. 92, 5983 (1988); Bebelis @ Vayenas, J. Catal. 118, 125 (1989); Neophytides @ Vayenas, J. Catal. 118, 147 (1989); Vayenas, Bebelis, Neophytides @ Yentekakis, Appl. Phys. A 49, 95 (1989); Lintz @ Vayenas, Angew. Chemie 101, 725 (1989); Intnl. Engl. Ed. 28, 708 (1989); Vayenas, Bebelis @ Neophytides in "Studies in Surface Science and Catalysis". G. Centi and F. Trifiro eds., Elsevier Sci. Publ. 55, 643 (1990); Vayenas, Bebelis @ Ladas, Nature 343, 625 (1990); Vayenas, Bebelis, Yentekakis, Tsiakaras @ Karasali, Plat. Met. Rev. 34, 122 (1990)) because in all the above publications it is made clear and emphasized that the solid electrolyte in the experimental set-up is non-porous, i.e., impermeable to gases. Consequently in these previous set-ups there is complete separation of the reactant and product gas stream. Also in all the previously described set-ups the auxiliary as well as the reference electrode, which is not needed in the present invention, are always and necessarily on the opposite side of the gas-impervious solid electrolyte from the catalyst film, i.e. the described set-ups are always of the type shown in Figure 1, with the important and previously mentioned difference of the gas-imperviousness of the solid electrolyte.

The fact that in the present invention the solid electrolyte is not gas - impervious and thus no gas-stream separation is required make the present invention much easier to use in industrial applications than set-ups requiring gas stream separation. This important advancement in the state-of- the art has become possible due to our unpublished discovery that the solid electrolyte ions can be continuously regenerated from reactant gases present in the reactant stream during catalyst operation so that no separate air stream is required as in previous descriptions of the NEMCA effect.

The use of solid electrolytes in fuel cells is well known for many years (e.g. L.L. Hegedus, C.G. Vayenas and J.N. Michaels U.S. Patent 4,463,065). In these configurations, which are used for the production of electrical power one of the reactants (fuel), e.g. H₂, CO, CH₄ is fed to the one side of the solid electrolyte (which is non-porous) while the other reactant (usually O₂) is fed to the other side of the solid electrolyte. Suitable porous electrocatalysts are deposited on both sides of the solid electrolyte in order for the electrochemical combustion to take place and for electrical power to be produced. Another capability of the solid electrolyte fuel cells is the use of fuels like NH₃ (C.G. Vayenas and R. D. Farr, Science 208, 593 (1980), U.S. Patent No. 4,272,336) or CH₃OH (S. Neophytides and C.G. Vayenas, J. Electrochem. Soc. 137, 839 (1990)) for Chemical Cogeneration, i.e., the simultaneous generation of electrical power and useful chemical products, in this case NO from NH₃ and H₂CO from CH₃OH.

The main differences of this invention from all previous applications of solid electrolytes in Fuel Cells and in Chemical Cogeneration are the following:
1. All reactants and products are on the same side of the solid electrolyte, which in this case does not separate the fuel from the oxygen. The catalyst is also on the same side of the solid electrolyte together with products are reactants (figures 1 and 2).
2. The chemical reactions which take place are catalytic and the induced rate increases are not subject to the Law of Faraday (C.G. Vayenas, S. Bebelis and S. Ladas, Nature, 343, 625 (1990)), contrary to the reactions taking place in fuel cells which are electrochemical and obey the Law of Faraday.
3. The solid electrolyte can be porous in contrast to fuel cells where the solid electrolyte must be necessarily non-porous in order to avoid mixing of fuel and oxygen.
4. The counter electrode can be placed on the same side of the solid electrolyte with the catalyst in contrast to fuel cells where it is placed necessarily on the opposite side.
5. What is attained by the application of the present invention is the improvement of catalytic properties (activity or/and selectivity) of metal or metal oxide catalysts and not the production of electrical energy which is the goal of every fuel cell. Also the present invention differs from all electrolysis processes utilizing solid electrolytes (e.g. E.J.L. Schouler, Solid State Ionics 9/10, 945 (1983)) because there is no separation of the gas streams and the Law of Faraday is not obeyed.

The above differences 1,3 and 4 make the present invention much easier to use and operate than solid electrolyte fuel cells because in the latter the prerequisite of non-mixing of the two streams of fuel and oxygen constitutes one of the most difficult problems in their design and operation.

As referred to above, the present invention relates to industrial applications for carrying out catalytic reactions in chemical reactors. Examples of application which may be included in accordance with the present invention include, but are not limited to, the following examples:
A. Catalytic oxidations such as
   - Oxidation of light hydrocarbons to CO₂
   - Oxidation of CO to CO₂
   - Oxidation of paraffins to oxygenated products
   - Oxidation of olefins to oxygenated products
   - Oxidation of alkyl-aromatics to oxygenated products.
   - Oxidation of napthalene to phthalic anhydride
   - Oxidation of benzene to maleic anhydride
   - Oxidation of butane to maleic anhydride
   - Oxidation of methane to ethane and ethylene
   - Oxidation of methanol to formaldehyde
   - Oxidation of H₂S to SO₂
   - Oxidation of SO₂ to SO₃
B. Addition reactions such as
   - CO+H₂ to higher hydrocarbons
   - CO+H₂ to partially oxidized hydrocarbons
   - CO+H₂+olefins to higher hydrocarbons
   - N₂+3H₂to ammonia
   - CO+2H₂ to methanol
C. Decomposition reactions such as:
   - NO to N₂ and O₂
   - Higher hydrocarbons to lower hydrocarbons
The following working Examples represent a more detailed description of the invention.

### Example 1

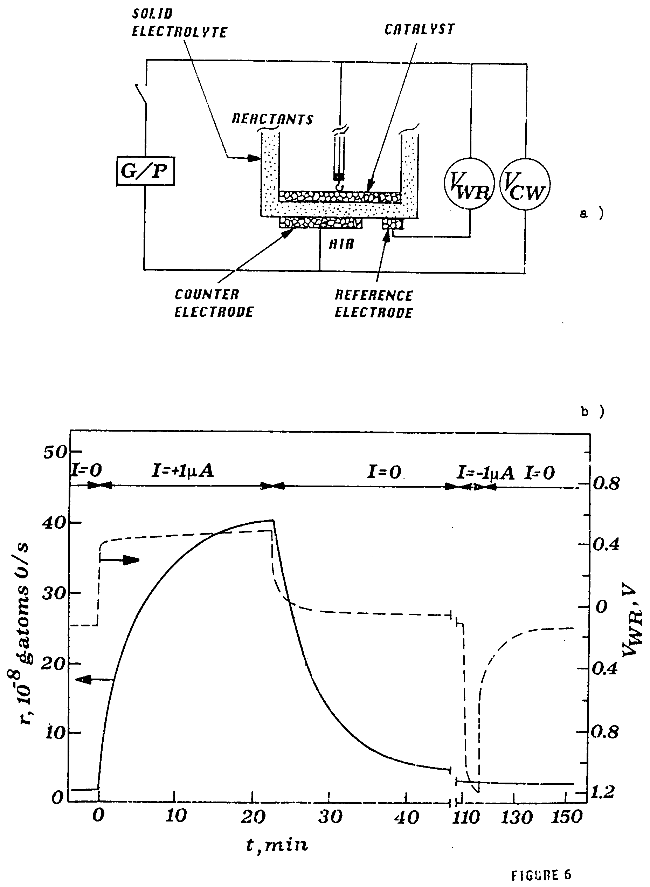

A Pt prorous catalytic film with a surface area of 4.2·10⁻⁹ g-atom Pt is supported on a ZrO₂ (8mol%Y₂ O₃) solid surface and acts as catalyst for the oxidation of ethylene to CO₂ and H₂O (Fig. 6a). The temperature is 370°C the oxygen partial pressure 4.6x10⁻² bar and the ethylene partial pressure 3.6x10⁻³ bar. Upon application of a current equal to 1µA between the catalyst and the counter electrode the rate of the catalytic reaction of ethylene oxidation increases by 2600% i.e. from the value of 1.5x10⁻⁸ g-atom O/s to the value of 38.5x10⁻⁸ g-atom O/s (Fig. 6b). The catalytic rate increase is 74000 times higher than the rate of electrochemical pumping of oxygen ions from the solid electrolyte to the catalyst, (i.e. I/2F, where I=1µA and F is the Faraday constant) which is computed by the Faraday Law. Upon current interruption the rate returns to its initial value (1.5·10⁻⁸g-atom O/s) before current application.

### Example 2

A mixture of CH₄ and O₂ with corresponding partial pressures equal to 5.10⁻² bar and 0.2·10⁻² bar is fed onto a porous silver film supported on the surface of a porous ZrO₂(8mole%Y₂O₃) solid electrolyte film. The products are C₂H₄ (ethylene), C₂H₆ (ethane) and CO₂ at a temperature of 650°C. The selectivity to C₂-hydrocarbons (i.e. ethane and ethylene) is 40% i.e. 40% of reacting CH₄ is converted to ethane (20%),ethylene (20%) and the remaining 60% to CO₂. Upon application of an electric voltage of -0.5 V between the catalyst and the counter silver electrode, i.e. by imposing on the catalyst a 0.5 V more negative potential than the one of the counter elextrode, the selectivity to C₂-hydrocarbons increases to 60%, i.e, 60% of the reacting methane is converted to ethane (30%), ethylene (30%) and the remaining 40% to CO₂.

### Literature cited

L.L. Hegedus, C.G. Vayenas and J.N. Michaels, U.S. Patent No. 4,463,065
C.G. Vayenas and R.D. Farr, Science 208 (1990)
D. Ortman and C.G. Vayenas , U.S. Patent No. 4,272,336 S.Neophytides and C.G. Vayenas, J. Electrochem. Soc.137, 839 (1990)
C.G. Vayenas, S. Bebelis and S. Ladas, Nature 343 ,625 (1990)
E.J.L. Schouler, Solid State Ionics 9/10 ,945 (1983)
C.G. Vayenas, S.Bebelis and S. Neophytides, J. Phys. Chem. 92 ,5983 (1988)
S. Bebelis and C.G. Vayenas, J. Catal. 118 , 125 (1989)
S. Neophytides and C.G. Vayenas, J.Catal. 118 , 147 (1989)
C.G. Vayenas, S. Bebelis, S. Neophytides and I.V. Yentekakis, Appl. Phys. A. 49 ,95 (1989)
H.-G. Lintz and C.G. Vayenas, Angew. Chemie 101 , 725 (1989); Intnl. Engl. Ed. 28, 708 (1989)
C.G. Vayenas, S. Bebelis, S. Neophytides in "New Developments in Selective Oxidation" (G. Centi and P. Trifiro, Ed.) Studies in Surface Science and Catalysis 55, pp.643-652, Elsevier, Amsterdam 1990.

## Claims

1. A method for carrying out catalytic reactions including the use of a metal or metal oxide in contact with a solid electrolyte and the application of an electric current between the catalyst and a counter electrode (Fig. 1 and 2), inducing a catalytic rate change higher than the rate I/2F of supply or removal of ions onto the catalyst surface,
charaterized in that the solid electrolyte is not gas-impervious, the solid electrolyte ions being continuously regenerated from reactant gases present in the reactant stream during catalyst operation so that no separate air stream is required, the porous solid electrolyte being a conductor of O²⁻ (e.g. ZrO₂ (8mole%Y₂O₃)), Na⁺ (for instance β''-Al₂O₃), H⁺, K⁺ (substituted β''-Al₂O₃), the shape being selected from a tube (Fig. 1a, 2a), or parallel tubes or a planar sheet (Fig. 1b, 2b, 3 and 4) or planar ribbed sheets so that channels between the sheets are formed, the metal being a transition element and the oxide a transition metal oxide or a conductive mixture of both, the catalytic reactions being:
A. Catalytic oxidations such as
- Oxidation of light hydrocarbons to CO₂
- Oxidation of CO to CO₂
- Oxidation of paraffins to oxygenated products
- Oxidation of olefins to oxygenated products
- Oxidation of alkyl-aromatics to oxygenated products
- Oxidation of napthalene to phthalic anhydride
- Oxidation of benzene to maleic anhydride
- Oxidation of butane to maleic anhydride
- Oxidation of methane to ethane and ethylene
- Oxidation of methanol to formaldehyde
- Oxidation of H₂S to SO₂
- Oxidation of SO₂ to SO₃
B. Addition reactions such as
- CO+H₂ to higher hydrocarbons
- CO+H₂ to partially oxidized hydrocarbons
- CO+H₂+olefins to higher hydrocarbons
- N₂+3H₂ to ammonia
- CO+2H₂ to methanol
C. Decomposition reactions such as:
- NO to N₂ and O₂
- Higher hydrocarbons to lower hydrocarbons

2. A method for carrying out catalytic reactions using the porous solid electrolyte for catalytic reactions as claimed in claim 1 wherein the electric voltage or electric current is not applied but created spontaneously between the solid electrolyte and the catalyst (Fig. 4) by potential difference developed between the two metals of different electronegativity supported on the solid porous electrolyte (1 and 2 in Fig. 3) forming a galvanic cell, the catalyst being either in the form of a continuous film (Fig. 4a) or in the form of supported particles (Fig. 4b), in which case no counter electrode is required.

3. A method as claimed in claim 1, wherein the applied potential or current between the catalyst and a counter electrode is not constant in time but varied periodically in time.

4. A method for carrying out catalytic reactions as claimed in claim 1 wherein all reactants and products together with the catalyst and the porous solid electrolyte are on the same side.

5. The use of the solid porous electrolyte with supported catalyst and auxiliary electrode films as claimed in claim 1 as continuous flow chemical reactors (Fig. 5).

## Patentansprüche

1. Verfahren zur Durchführung katalytischer Reaktionen, welches den Gebrauch eines Metalls oder Metalloxyds in Kontakt mit einem festen Elektrolyten einschließt und die Anwendung eines elektrischen Stroms zwischen dem Katalysator und einer Gegenelektrode (Fig. 1 und 2) zur Erzeugung eines Wechsels der katalytischen Geschwindigkeitsrate über den Wert von I/2F der Aufnahme oder Abspaltung von Ionen auf der Katalysatoroberfläche,
dadurch gekennzeichnet, daß der feste Elektrolyt nicht gasdurchlässig ist, die Ionen des festen Elektrolyten sich kontinuierlich regenerieren aus den während der Katalyse im Reagentienstrom anwesenden Reaktionsgasen, sodaß kein zusätzlicher Luftstrom vonnöten ist, der poröse feste Elektrolyt ein Leiter von O²⁻ (z.B. ZrO₂ (8 Mol % Y₂O₃)), Na⁺ (z.B. β''-Al₂O₃), H⁺, K⁺ (substituiertes β''-Al₂O₃) ist, die ausgewählte Form eine Röhre (Fig. 1a, 2a) ist oder parallele Röhren oder eine flache Platte (Fig. 1b, 2b, 3 und 4) oder flache gerippte Platten, sodaß Kanäle zwischen den Platten gebildet werden, das Material ein Transitionselement und das Oxyd ein Transitionsmetalloxyd oder eine leitende Mischung aus beiden ist. Die katalytischen Reaktionen sind:
A. Katalytische Oxydationen wie:
- Oxydation leichter Kohlenwasserstoffe in CO₂
- Oxydation von CO in CO₂
- Oxydation von Paraffinen in sauerstoffangereicherte Produkte
- Oxydation von Olefinen in sauerstoffangereicherte Produkte
- Oxydation von aromatischen Alkylen in sauerstoffangereicherte Produkte
- Oxydation von Naphthalin in Phtalsäureanhydrid
- Oxydation von Benzol in Maleinsäureanhydrid
- Oxydation von Butan in Maleinsäureanhydrid
- Oxydation von Methan in Äthan und Äthylen
- Oxydation von Methanol in Formaldehyd
- Oxydation von H₂S in SO₂
- Oxydation von SO₂ in SO₃
B. Additionsreaktionen wie:
- CO + H₂ in höhere Kohlenwasserstoffe
- CO + H₂ in teilweise oxydierte Kohlenwasserstoffe
- CO + H₂ + Olefine in höhere Kohlenwasserstoffe
- N₂ + 3H₂ in Ammoniak
- CO + 2H₂ in Methanol
C. Spaltreaktionen wie:
- NO in N₂ und O₂
- Höhere Kohlenwasserstoffe in niedere Kohlenwasserstoffe.

2. Ein Verfahren zur Durchführung katalytischer Reaktionen unter Verwendung des porösen festen Elektrolyten für katalytische Reaktionen gemäß Anspruch 1, wobei die elektrische Spannung oder der elektrische Strom nicht zugeleitet wird, sondern spontan entsteht zwischen dem festen Elektrolyt und dem Katalysator (Fig. 4) durch Potentialdifferenz der beiden Metalle auf dem festen porösen Elektrolyt (1 und 2 in Fig. 3) mit unterschiedlichen elektro-negativen Eigenschaften, so eine galvanische Zelle bildend, wobei der Katalysator entweder die Form eines kontinuierlichen Films (Fig. 4a) oder aufgetragener Partikel (Fig. 4b) hat, in welchem Fall keine Gegenelektrode vonnöten ist.

3. Ein Verfahren gemäß Anspruch 1, wobei die angewendete Stromstärke oder der Strom zwischen dem Katalysator und der Gegenelektrode nicht zeitkonstant ist, sondern periodisch wechselnd in der Zeit.

4. Ein Verfahren zur Durchführung katalytischer Reaktionen gemäß Anspruch 1, wobei alle Reagentien und Produkte zusammen mit dem Katalysator sich auf der gleichen Seite wie der poröse feste Elektrolyt befinden.

5. Der Gebrauch eines festen porösen Elektrolyten mit beschichtetem Katalysator und einem Film als Hilfselektrode wie in Anspruch 1 beansprucht, als offener chemischer Reaktor kontinuierlicher Strömung (Fig. 5).

## Revendications

1. Une méthode pour la conduite de réactions catalytiques comprenant de l'utilisation d'un métal ou d'un oxyde de métal en contact avec un électrolyte solide et de l'application d'un courant électrique entre le catalyseur et une contre-électrode (Fig. 1 et 2), induisant une variation de la vitesse de réaction catalytique supérieure à la vitesse I/2F de transport d'ions de ou vers la surface du catalyseur; caractérisée en ce que l'électrolyte solide n'est pas imperméable aux gaz, les ions de l'électrolyte solide étant régénérés en contenu à partir des réactifs gazeux pendant la réaction catalytique de telle manière à ce qu'aucun débit d'air additionnel ne soit nécessaire; l'électrolyte solide poreux étant un conducteur d'ions O²⁻ (p.ex. ZrO₂ (8 mol % Y₂O₃)), Na⁺ (p.ex. β''-Al₂O₃), H⁺, K⁺ (β''-Al₂O₃ substituée); le catalyseur selectant de forme de tube (Fig. 1a, 2a) ou de tubes parallèles, de feuillet plan (Fig. 1b, 2b, 3 et 4) ou feuillets plans canelés de telle manière à ce que des passages soient formés entre les feuillets; le métal étant un élément de trasition et l'oxyde un oxyde d'un métal de transition ou un mélange conducteur des deux; les réactions catalytiques étant:
A. Oxydations catalytiques telles que:
- oxydation d'hydrocarbones légers en CO₂
- oxydation de CO en CO₂
- oxydation de paraffines en produits oxygénés
- oxydation d'olefines en produits oxygénés
- oxydation d'alkyl-aromatiques en produits oxygénés
- oxydation de naphtalène en anhydride phtalique
- oxydation de benzène en anhydride maléique
- oxydation de butane en anhydride maléique
- oxydation de méthane en éthane et éthylène
- oxydation de méthanol en formaldéhyde
- oxydation de H₂S en SO₂
- oxydation de SO₂ en SO₃
B. Réactions d'addition telles que:
- CO + H₂ en hydrocarbones à plus longue chaîne de carbone
- CO + H₂ en hydrocarbones partiellement oxydés
- CO + H₂ + oléfines en hydrocarbones à plus longue chaîne de carbone
- N₂ + 3H₂ en ammoniac
- CO + 2H₂ en méthanol
C. Réactions de décomposition telles que:
- NO en N₂ et O₂
- hydrocarbones à plus longue chaîne de carbone en hydrocarbones à plus courte chaîne de carbone

2. Une méthode pour la conduite de réactions catalytiques utilisant l'électrolyte solide poreux pour des réactions catalytiques selon la revendication 1, dans laquelle le potentiel ou le courant électrique ne sont pas appliqués mais créés de manière spontanée entre l'électrolyte solide et le catalyseur (Fig. 4) par la différence de potentiel développée entre les deux métaux d'électronégativité différente supportés sur l'électrolyte solide poreux (1 et 2 de la Figure 3) et formant ainsi une pile galvanique; le catalyseur étant sous la forme d'un film continu (Fig. 4a) ou sous la forme de particules supportées (Fig. 4b), en quel cas aucune contre-électrode n'étant requisé.

3. Une méthode selon la revendication 1, dans laquelle le potentiel ou le courant électrique entre le catalyseur et une contre-électrode ne sont pas constants dans le temps mais variés de manière périodique dans le temps.

4. Une méthode pour la conduite de réactions catalytiques selon la revendication 1, dans laquelle tous les réactifs et produits avec le catalyseur et l'électrolyte solide poreux sont du même côté.

5. L'utilisation de l'électrolyte solide poreux avec des catalyseurs supportés et des électrodes auxiliaires sous forme de films, selon la revendication 1, comme réacteur chimique ouvert de fluctuation continuée.
